# EUROPEAN PATENT SPECIFICATION

(11) **EP 2 437 614 B1**
(45) Date of publication and mention of the grant of the patent: **13.09.2017**
(21) Application number: 10783634.8
(22) Date of filing: 04.06.2010
(51) Int. Cl.: A23C 19/082, A23C 19/084, A23C 19/05, A23J 3/10, A23C 9/146

(54) **Calcium fortified processed cheese without emulsifying salts, and process for preparing same**
Kalziumverstärkter verarbeiteter Käse ohne Emulgatorsalze sowie Herstellungsverfahren dafür
Fromage fondu fortifié au calcium sans sels émulsifiants, et son procédé de préparation

(30) Priority: 04.06.2009 US 184155 P
(43) Date of publication of application: 11.04.2012
(73) Proprietor: Fonterra Co-Operative Group Limited, Auckland 1010 (NZ)
(72) Inventor: GALPIN, Alexandra, Kay, Palmerston North (NZ); BHASKAR, Ganugapati, Vijaya, Palmerston North (NZ); BUWALDA, Robert, John, Palmerston North (NZ); DONK, Rochelle, Kathleen, Palmerston North (NZ); HARPER, Samuel, James, Palmerston North (NZ)
(74) Representative: Barton, Matthew Thomas
(86) International application number: PCT/NZ2010/000109
(87) International publication number: WO 2010/140905

(56) References cited:
- EP-A1- 1 884 165
- EP-A1- 2 027 776
- EP-A2- 1 138 207
- WO-A1-01/41578
- WO-A1-2007/100264
- US-A- 6 007 852
- US-A1- 2005 196 489

## Description

### FIELD OF THE INVENTION

The present invention relates to a method of preparing a processed cheese and to processed cheese products made by the method.

### BACKGROUND OF THE INVENTION

Traditional manufacturing procedures for making pasteurized processed cheese involve the cooking and melting of traditional cheeses, such as cheddar with emulsifiers, extra salt, food colouring, and/or whey.

Processed cheese has three main technical advantages over unprocessed cheese: extended shelf-life, resistance to the separation of both free fat and also cheese serum when cooked, and the ability to reuse scraps, trimmings and runoff from other cheesemaking processes.

Traditional cheesemaking inevitably produces 'scrap' pieces that would not be acceptable for supermarket display; production of processed cheese from cheese scrap allows the cheesemaker to add value to otherwise unmarketable scrap. Processing can turn these scraps into new presentable shapes for repackaging shapes for repackaging and sale.

### Use of emulsifying salts

The use of emulsifiers in processed cheese results in cheese that melts smoothly when cooked. With prolonged heating, unprocessed cheese will separate into a molten protein gel and free liquid fat, while the natural cheese casein coagulation will rupture to provide free serum.

Processed cheese will not separate in this manner. The emulsifiers, typically sodium phosphate, potassium phosphate, tartrate, or citrate, reduce the tendency for tiny fat globules in the cheese to coalesce and pool on the surface of the molten cheese.

Because processed cheese does not separate when melted, it is used as an ingredient in a variety of dishes. It is a fairly popular condiment on hamburgers, as it does not run off, nor does it change in texture or taste as it is heated.

Emulsifying salts dissociate during processed cheese manufacture to release monovalent cations, such as sodium, and the associated anions, such as phosphate or citrate. A significant amount of the monovalent cations subsequently exchange with a portion of the divalent cations, such as calcium, normally bound to the casein micelles. Casein micelles constitute the major protein in milk and are coagulated by rennet to produce natural cheese coagulum. However, the bonding of multiple casein molecules together by divalent cations to create casein micelles, significantly reduces the ability of these proteins to emulsify fat. The cation exchange facilitated by added emulsifying salt inserts monovalent cations into the caseins, dispersing the micellar casein and transforming the shape of the individual caseins into conformations with the polarized, amphipathic properties of soaps. The conformational change resulting from the exchange of monovalent cations for divalent cations in casein micelles alters casein conformation into shapes that greatly enhance the ability of the available casein to emulsify fat, thereby preventing the formation of free fat during cooking.

The mechanism of ion exchange is identical for all emulsifying salts. However, differences between the anions of the various emulsifying salts create distinctive differences in the flavour, melting ability, body, and texture in the finished processed cheese.

While the use of emulsifying salts transformed processed cheese manufacture into a major, world wide industry, the use of emulsifying salts limits potential marketing opportunities as it is not possible under food labelling legislation to label cheese containing emulsification salts as organic or natural.

In addition, processed cheese can only be manufactured in a small range of flavours, all of which are very mild. This is because the flavour of emulsification salts cannot easily be masked and is only eliminated by removing these compounds. In addition, it is difficult to produce a product low in phosphate if phosphate emulsifying salts are used.

Reliance upon emulsifying salts also limits processing efficiency by:
1. increasing the number of ingredients required to produce the processed cheese, thereby mandating more complex formulations, greater ingredient inventory, and additional processing steps, and
2. increasing formulation costs when the price of emulsifying salts exceed the price of cheese.

### Manipulation of calcium

Effective process cheese manufacturing procedures must favourably manipulate the chemical bonding of calcium and calcium phosphate within cheese casein to simultaneously produce an effective emulsifier and the desired gel.

Caseins are the major group of proteins in milk and typically account for up to 99% of the protein in cheese. Unique properties allow many individual caseins to bind large amounts of ionic calcium and insoluble calcium salts within large colloidal aggregates, called micelles. Although the creation of micelles transforms the individual caseins and insoluble calcium phosphate salts into a stable colloid, the rigidity of these structures severely limit the ability of casein to both emulsify fat while forming the desired type of gel needed to produce the desired body and texture.

Traditional manufacturing procedures for making pasteurized process cheese require the addition of emulsifying salts, such as trisodium citrate and/or specified sodium phosphates. Without emulsifying salts, the heat treatment used for cooking process cheese ruins the product by:
1. breaking the emulsion present in natural cheese to generate free fat, and by
2. rupturing the casein coagulum in natural cheese to produce free serum.

The emulsifying salts dissolve during process cheese manufacture to release monovalent cations that exchange with a specified portion of the divalent cations, mainly calcium, bound within the casein micelles of the natural cheese coagulum. The resulting cation exchange transforms the shape of the caseins into conformations that emulsify milk fat and gel upon cooling. Enhancing the ability of the available casein to emulsify fat prevents the formation of free fat during cooking. However, a specified portion of the calcium bound to the casein in the micelle must be retained to create the desired gel upon cooling. This gel binds the available water, simultaneously preventing the formation of free serum while creating the body and texture of the finished process cheese.

Merely removing calcium from the casein does not produce high quality process cheese products. Various casein products with a low calcium content, such as sodium caseinate, emulsify fat very well. However, such products do not form the desired gel upon cooling. Therefore, the successful process must exchange only the correct amount of divalent calcium with monovalent sodium or potassium to simultaneously create both the desired emulsion and yet maintain the desired gel upon cooling.

Process cheese is a major dietary source of calcium, a required nutrient. Removal of the calcium significantly reduces the nutritional value of the product. But unless the calcium content of the cheese and/or suitable dairy liquid is significantly reduced, process cheese and related products cannot be made without emulsifying salts.

Addition of calcium to conventional processed cheese is associated with the development of a chalky flavor and usually requires the use of additional emulsifying salts to create processed cheese with acceptable melting properties.

It would be desirable to produce a processed cheese product that overcame some or all of these problems.

It is an object of the present invention to go some way towards providing a nutritious cheese without reliance on emulsifying salts, and/or to provide the public with a useful choice.

EP2027776 A1 discloses a processed cheese obtained without the use of emulsifying salts.

US patent application publication number US 2005/0196489 A1 discloses nutritionally improved cultured dairy products such as yogurt products including fine powdered calcium phosphate salt having a reduced particle size to provide a calcium content of 0.25% to 0.75%. The publication also discloses a method for producing the calcium fortified yogurt.

European patent application publication number EP 1 884 165 A1 discloses methods for preparing nutrient fortified foods, in particular processed cheeses fortified with magnesium.

### DISCLOSURE OF THE INVENTION

The present invention provides a method for eliminating emulsifying salts in process cheese manufacture. The present disclosure also provides for process cheese and related products produced without emulsifying salts, but with normal or enhanced calcium levels. The use of a calcium-depleted casein source provides a processed cheese with good organoleptic properties and melt characteristics even when supplemented with an added substantially insoluble calcium source.

According to the present invention there is provided a method for preparing processed cheese without emulsifying salts, comprising:
(a) providing a dairy liquid composition or a gelled dairy composition or both, comprising casein, at least part of which has a proportion of its divalent ions, including calcium ions, replaced with sodium or potassium ions;
(b) cooking the composition or the combination of compositions to obtain an emulsion, and
(c) cooling the cooked composition to obtain a processed cheese;
wherein a substantially insoluble calcium source is mixed with at least one of the compositions at any time before the processed cheese forms in step (c), and at least 60% by weight of the substantially insoluble calcium source is in the form of particles that are less than 10 micrometres in nominal diameter.

Preferably, a dairy liquid composition is provided in step (a).

Conveniently, the dairy liquid composition is an ultrafiltration retentate, preferably comprising calcium-depleted, concentrated or dried, milk protein concentrate or milk protein isolate.

Advantageously, the composition to be cooked includes cheese or ultrafiltration cheese.

Preferably, a dairy liquid composition is provided that is prepared by suspension of a dairy powder formed by drying a mixture of (a) a dairy liquid that has undergone replacement of calcium by sodium or potassium and (b) a substantially insoluble calcium source.

Advantageously, the cooking step does not involve stirring, or any stirring is at less than 2000 rpm, preferably less than 200 rpm.

Conveniently, a milk ingredient in the composition to be cooked is prepared by removal of calcium using cation exchange chromatography.

Preferably, 5% to 95% of the divalent cations bound to caseins and divalently holding the micelles together are exchanged with monovalent cations in the composition to be cooked.

Advantageously, the percentage is 30% to 90%, preferably 65% to 85%.

Preferably, the composition to be cooked comprises milk or retentate that has been subjected to cheese coagulating enzymes before or after cation exchange.

Conveniently, the substantially insoluble calcium source is selected from the group tri-calcium phosphate, hydroxylapatite, calcium carbonate, calcium sulphate, limestone, dolomite, coral, shell, aragonite, bone and gypsum, preferably a calcium salt selected from the group tricalcium phosphate, hydroxylapatite, calcium carbonate, and calcium sulphate.

Advantageously, the calcium source is in the form of particles that are less than 10 micrometres in nominal diameter.

Preferably, the amount of substantially insoluble calcium added is selected so that the level of calcium added is either at least 5% of the calcium in the processed cheese or is sufficient to bring the calcium concentration in the mixture to be cooled to the level of the corresponding mixture had the calcium-depleted casein source not been calcium-depleted, preferably wherein the amount of substantially insoluble calcium added is selected so that the calcium concentration in the composition to be cooked exceeds the level of the corresponding non-depleted mixture by 1-40%.

Advantageously, the dry matter content of the reduced calcium milk protein concentrate is 10% to 35% of the weight of cheese in the blend to be cooked, and the reduced calcium milk protein concentrate has 20-100% calcium depletion.

Conveniently, the composition to be cooked has a pH in the range 4.6 to 6.4.

Preferably, the cooking temperature is from 65°C to 150°C, preferably wherein the temperature is 65°C to 110°C and the cooking time is 1 to 30 minutes.

A "processed cheese" (also known as "process cheese") is a composition prepared from cheese or ultrafiltration cheese by cooking and melting, with subsequent cooling. It is an emulsion when hot and a suspension when cold, of butter fat droplets in a continuous hydrated protein phase. This is created when natural cheese is subjected to a process of melting and mixing in the presence of processing salts. The processing salts convert the insoluble protein (calcium para-casein) to soluble sodium caseinate through the process of ion exchange, resulting in a stable, continuous phase (Stephen Dixon). When the hot processed cheese is formed, it is a homogeneous pumpable, fluid cheese material that may be formed into sheets, slices or other desired forms. In the prior art, the processing salts are generally emulsifying salts. In the present invention, sodium and potassium casein salts are used. A processed cheese can generally be heated to 70°C, preferably 90°C, to form a melted cheese without separation of liquid free fat.

An "ultrafiltration cheese" is a cheese that has been prepared from ultrafiltered milk that is acidified and heated to produce a cheese. Ultrafiltration cheeses may be made without using coagulation enzymes. They are also known as cheese bases or cheese for manufacture.

An "emulsifying salt" is a salt used in conventional processed cheese manufacture to reduce the tendency for fat globules to coalesce and pool on the surface of the molten cheese. These salts include phosphate salts and salts of organic acids. Examples are sodium and potassium salts that are phosphates, tartrate or citrates. Preferred emulsifying salts may be selected from the group consisting of one or any mixture of two or more of the following: monosodium phosphate, disodium phosphate, dipotassium phosphate, trisodium phosphate, sodium metaphosphate (sodium hexametaphosphate), sodium acid pyrophosphate, tetrasodium pyrophosphate, sodium aluminum phosphate, sodium citrate, potassium citrate, calcium citrate, sodium tartrate, and sodium potassium tartrate. Sodium chloride and potassium chloride are not emulsifying salts.

A "dairy liquid composition" is any source of milk or milk ingredients useful for cheese manufacture or processed cheese manufacture. Milk from sheep, goats and especially cows is preferred. The composition may have been heat treated to denature the proteins, especially the whey proteins (either on their own or in the presence of casein). Milk concentrates and milk protein concentrates are especially preferred dairy liquid compositions for use in this invention.

The dairy liquid composition may comprise casein having a proportion of its divalent ions, including calcium ions, replaced with sodium or potassium ions. Such compositions may be prepared by suspension of a dairy powder from a dairy liquid prepared following replacement of calcium by sodium or potassium. The composition may also be prepared from a blend of such a powder with a substantially insoluble calcium source or from a powder formed by drying a mixture of (a) a dairy liquid that has undergone replacement of calcium by sodium or potassium and (b) a substantially insoluble calcium source. The use of the blend is a preferred way of adding the insoluble calcium. Particularly preferred is the use of a dried mixture of the calcium-depleted dairy liquid with the substantially insoluble casein source.

The term "milk concentrate" means any liquid or dried dairy-based concentrate comprising milk, skim milk, or milk proteins such that the concentrate has a casein to whey ratio between 1:9 and 9:1 by weight and a casein content above 3% (w/v). A milk protein concentrate is a preferred milk concentrate for use in the invention.

The term "milk protein concentrate" (MPC) refers to a milk protein product in which greater than 40%, preferably greater than 55%, most preferably 70% of the solids-not-fat (SNF) is milk protein (by weight on a moisture-free basis) and the weight ratio of casein to whey proteins is substantially the same as that of the milk from which it was prepared. Such concentrates are known in the art. MPCs are frequently described with the percentage dry matter as milk protein being appended to "MPC". For example, MPC70 is an MPC with 70% of the dry matter as milk protein.

A "gelled dairy composition" is any dairy liquid composition that has gelled and includes a cheese or an ultrafiltration cheese.

The term "calcium ions" refers broadly to divalent cations and includes ionic calcium or magnesium and colloidal forms of calcium or magnesium unless the context requires otherwise.

The term "magnesium ions" is used broadly and includes ionic magnesium and colloidal magnesium unless the context requires otherwise.

A "substantially insoluble calcium source" is a calcium source having a solubility when dissolved in (pure) water of less than 10g/L, preferably < 5g/L and more preferably <2g/L.

"Calcium-depleted" ingredients refers to milk compositions and ingredients in which the calcium or magnesium content is lower than the corresponding non-depleted composition or ingredient. These ingredients generally also have a lower content of divalent cations, for example, lower calcium or magnesium, or both, than corresponding non-depleted ingredients. Additionally, the monovalent cation concentrations will be different to that of starting milk. Calcium depletion does not include incidental loss of calcium not bound to casein from conventional preparation of milk ingredients including loss of calcium by ultrafiltration or diafiltration above pH 6.0. Calcium depletion is generally carried out using ion exchange chromatography or acid dialysis at pH 4.5 to 6.0 or by electrodialysis.

The term "comprising" as used in this specification means 'consisting at least in part of, that is to say when interpreting statements in this specification and claims which include that term, the features, prefaced by that term in each statement, all need to be present but other features can also be present.

The exchange of monovalent cations for divalent cations within native casein micelles in milk or dairy liquid such as milk retentate enhances the ability of the modified casein to emulsify fat. Processing the modified milk or retentate into ingredients for process cheese manufacture creates ingredients capable of emulsifying milk fat during cooking in a manner that previously required the addition of emulsifying salts. The calcium-depleted milk or dairy liquid may be processed into ingredients for use in the manufacture of process cheese including specific types of natural cheese, specific cheese for manufacturing, dry milk products, or retentates made by membrane technology. The prepared retentates then are processed into ingredients for the manufacture of processed cheese including natural cheese, cheese for manufacturing, milk protein concentrates, and/or milk protein isolates.

The monovalent cations introduced into milk for exchange with divalent cations in the micelles are sodium and potassium ions or both, but other monovalent ions may be included with the sodium and/or potassium, for example, hydrogen ions, H⁺. In a preferred embodiment, the added monovalent cations replace the divalent cation, calcium, Ca⁺⁺, bound within the casein micelles.

The desired monovalent cations are introduced into the milk by external procedures that avoid the addition of emulsifying salts. Eliminating the emulsifying salts from any process cheese formulation removes the anion portion of such salts from the finished product. Without emulsifying salts, the anion cannot directly affect the flavour, melting ability, body, and texture of the finished process cheese.

Ion exchange is a preferred method for exchanging monovalent cations for divalent cations in native casein micelles of the prepared milk and/or retentate. Ion exchange preferably is performed by processing milk and/or retentate with an appropriately charged or activated medium, such as a functionalized gel polymer or resin. These methods include those disclosed in published PCT applications WO01/41579 and WO01/41578, and US Patent applications 2003/0096036 and 2004/0197440. Currently preferred is use of a milk ingredient, in the composition to be cooked, that is prepared by removal of calcium using cation exchange chromatography, preferably on a resin bearing strongly acidic groups, for example, sulfonate groups (in the sodium or potassium form). Preferably, the pH of the milk material subjected to calcium depletion is adjusted to have a pH in the range 6.0-6.5 prior to ion exchange treatment. Any food approved acidulent may be used, but lactic acid and sources of lactic acid or citric is preferred. Vinegar, acetic acid and phosphoric acid may also be used. The calcium-depleted milk product may be used as a liquid ingredient or dried to produce a dried ingredient. The extent of calcium depletion may be varied by altering the chromatography conditions, for by varying the nature and volume of the resin, the nature and amount of milk material, the space velocity (ratio of volume flow rate to resin bed volume), the blending of treated milk with untreated milk, the temperature, pH, etc.

Alternatively, electrodialysis is another preferred procedure for performing the desired cation exchange in milk. Milk is processed with an appropriate membrane system maintained at an appropriate electrical potential.

In another aspect , electrodialysis and other preferred membrane procedures are combined with diafiltration. Diafiltration enhances the purity of the casein portion of the retentate. Diafiltration also promotes the desired exchange of monovalent cations for divalent cations in the casein micelle when defined amounts of salt, or sodium chloride, are added to the water.

In a further aspect , divalent ions are removed using low pH ultrafiltration and/or diafiltration, for example, as described in US patent application 2003/0096036 and WO 01/41579. In a further embodiment the composition to be cooked is prepared from centrifuged, heat treated neutralised casein and whey proteins.

In preferred aspect of the disclosure , at least 5% to 95% of the divalent cations bound to caseins and divalently holding the micelles together are exchanged with monovalent cations, more preferably 30% to 90%, most preferably 65% to 85%. The percentages are of the casein in the material to be cooked. Preferably the divalent cations are replaced by sodium or potassium or both, preferably by sodium.

In a further aspect, the milk or retentate is subjected to proteolysis by a selected proteolytic enzyme or enzymes prior to or after cation exchange. In a more preferred embodiment, milk or retentate is treated with chymosin (EC 3.4.23.1) or by a similar cheese coagulating enzyme following the cation ion exchange and the removal of the divalent cations, particularly ionic calcium. Chymosin, or rennet, cuts 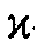 -casein at or near amino acid residues Phe₁₀₅-Met₁₀₆ to create para 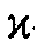 -casein and glycomacropeptide as the first stage in milk coagulation for cheese manufacture.

Methods of preparing low calcium rennetted milk protein concentrates are described in US 2007/0082086.

In a highly preferred aspect, retentate is sequentially treated, first to facilitate cation exchange by exchanging monovalent cations with divalent cations within the casein micelles. Then the retentate is treated to remove the free, divalent cations using membrane processing and diafiltration. Then the treated retentate is subjected to proteolysis by chymosin or a related protease at a temperature that maintains the treated, divalent free retentate as a liquid. Finally, the prepared retentate is concentrated and/or dried to produce a modified milk protein concentrate or milk protein isolate.

The substantially insoluble calcium source may be mixed with the liquid dairy ingredient or a gelled dairy ingredient or a mixture of more than one ingredient. It may also be added to the mixture during or after heating, but should be added before formation (setting) of the final product.

Calcium may be added using any edible source rich in calcium that is substantially insoluble as defined above. Preferred calcium salts are tri-calcium phosphate (TCP) (also known as calcium phosphate tribasic), hydroxylapatite, calcium carbonate and calcium sulphate. The calcium salt may be added either before or after the heat treatment step (iii). Other calcium sources include various naturally occurring minerals, e.g., limestone, dolomite, coral, shell, aragonite and bone. A natural product rich in calcium phosphate is ALAMIN™ sold by Fonterra Co-operative Group Limited, Auckland. Gypsum is a further useful calcium source. Preferably the calcium ingredient is ground fine enough to pass a 400# sieve, more preferably at least 60% by weight, more preferably all of the ingredient is in the form of particles are less than 10 micrometres in nominal diameter. The nominal diameter of small particles may be determined using readily available instruments typically using optical scattering techniques. One such instrument suitable for the determination of particle sizes is a Mastersizer 2000 (Malvern Instruments Ltd., Malvern, Worcestershire, United Kingdom).

The amount of substantially insoluble calcium to be added varies according to the extent of calcium depletion and the desired calcium level in the cheese product. Generally, the amount is selected so that the level of calcium added is either at least 5%, preferably at least 10% of the calcium in the processed cheese or is sufficient to bring the calcium concentration in the mixture to be cooled to the level of the corresponding mixture where the calcium-depleted casein source was not calcium-depleted. The amount added may alternatively exceed the level of the corresponding non-depleted mixture, generally by 1-40%, preferably by 5-20%.

In a further preferred aspect , the calcium depleted, concentrated or dried, milk protein concentrate or milk protein isolate is used as an ingredient in the manufacture of processed cheese and related products. In one embodiment, the dry matter content of reduced calcium milk protein concentrate (with 20-100% calcium depletion, preferably 20-80%) is 10-35% (preferably 10-30%) of the weight of cheese in the blend to be cooked.

In a preferred aspect the treated concentrated or dried milk protein concentrate or milk protein isolate is added as an ingredient in a process cheese formulation, and the formulation processed through cooking until all the fat is sufficiently emulsified. A specified amount of an appropriate divalent cation, such as calcium or magnesium, is added to the cooked, emulsified process cheese blend, catalyzing the formation of a casein gel upon cooling. In highly preferred embodiments, the exact quantity of divalent cation added, blend pH, and cooling temperature is exactly controlled to produce the desired melting ability, body, and texture of the finished process cheese or related product. Generally the blend pH is in the range 4.6-6.4, preferably 5.0-6.0, more preferably 5.4-5.9. These pH ranges are also preferred for the compositions to be cooked in other embodiments of the invention.

Cooking conditions may also vary considerably. For applications such as sliced processed cheese the cooked mixture may be cooled to 6°C in 1-2 minutes. For other applications, cooling may be to the local ambient temperature, taking place over days.

The appropriate cooking conditions vary considerably. Temperatures from 65°C-150°C are preferred. Shorter cooking times are preferred for higher temperatures. Thus at 65°C-110°C cooking times of 1-30 minutes are preferred, with 1-10 minutes more preferred and 2-5 minutes most preferred. With cooking at 130°C-150°C, the preferred cooking time is 0.1-50 seconds, with 10-30 seconds more preferred and 15-25 seconds most preferred. At 110°C-130°C, 10 seconds-5 minutes cooking is preferred. At the end of the cooking step the composition is an emulsion. This contrasts with the situation where cheese is cooked without the calcium-depletion of a casein source, where separation out of fat occurs.

Other ingredients may be used in the processed cheese. These may be selected from those allowed in the USA for "pasteurised process cheese" currently selected from one or more of:
▪ acidifying agents consisting of one or any mixture of two or more of the following:
   vinegar, lactic acid, citric acid, acetic acid, and phosphoric acid in any quantity that the pH of the pasteurized process cheese is not below 5.3;
▪ cream, anhydrous milkfat, dehydrated cream, or any combination of two or more of these, in such quantity that the weight of the fat derived therefrom is less than 5% of the weight of the pasteurized process cheese;
▪ water, salt, harmless artificial colouring, spices or flavourings.

Also envisaged are ingredients selected from those additionally allowed in the US for "pasteurised process cheese food" or "pasteurised process cheese spread". Pasteurised process cheese food:
▪ may contain more water and
▪ milk, skim milk, buttermilk, cheese whey, any of the foregoing from which part of the water has been removed, albumin from cheese, cheese whey
▪ acidifying agents such that the pH of the food is not below 5.0 including 0.2% sorbic acid, potassium sorbate, and/or sodium sorbate.

Further envisaged are gums, for example, carob bean, karaya, tragacanth, guar, gelatine, and sweetening agents, for example, sugar, dextrose, corn sugar, corn syrup, corn syrup solids, glucose, syrup, glucose syrup solids, maltose, malt syrup, and hydrolyzed lactose. Nisin may also be included.

Other ingredients may be used where these are acceptable to the local regulatory authorities. Such ingredients include dry milk, whey and whey protein concentrate.

An important feature of the process is to replace a specified amount of calcium and calcium phosphate salts bound to the casein within the casein micelles of cheese, with a suitable monovalent ion, such as sodium. Enough calcium must be retained within the micelle structure to produce the desired gel upon cooling.

Additionally the calcium replaced with a monovalent ion within the casein micelles will preferably be at least also replaced or even more than replaced by a substantially insoluble calcium source within the finished process cheese to maintain or enhance the nutritional and functional properties of the finished process cheese or related product. A further advantage of the invention is that by avoiding the use of emulsifying salts, the sodium content of the product may be reduced.

Also provided is an ingredient comprising a dried powder comprising a milk protein concentrate or a milk concentrate that has been dried after mixing with a substantially insoluble casein source, wherein the milk protein concentrate or milk concentrate has had calcium ions replaced by sodium or potassium ions by cation exchange. This ingredient may be used in preparing processed cheeses of the invention. It is preferably dried by spray-drying.

In a preferred aspect , the processed cheese is prepared without emulsifying sales in a method comprising:
(a) providing a mixture comprising cheese, milk protein concentrate, a milkfat source, and a substantially insoluble calcium source and water;
(b) cooking the mixture to between 65°C-150°C to obtain a smooth emulsion;
(c) cooling the cooked mixture to obtain a processed cheese
wherein the milk protein concentrate has been treated with cation exchange chromatography to replace 20-80% of its calcium by sodium or potassium ions and has a dry matter content that is 10-30% of the weight of cheese. Preferably, the milk protein concentrate is provided as a blend with the insoluble casein source. More preferably, the milk protein concentrate is provided as a dried concentrate dried with the insoluble calcium source.

In this specification, where reference has been made to external sources of information, including patent specifications and other documents, this is generally for the purpose of providing a context for discussing the features of the present invention. Unless stated otherwise, reference to such sources of information is not to be construed, in any jurisdiction, as an admission that such sources of information are prior art or form part of the common general knowledge in the art.

### DESCRIPTION OF THE FIGURES

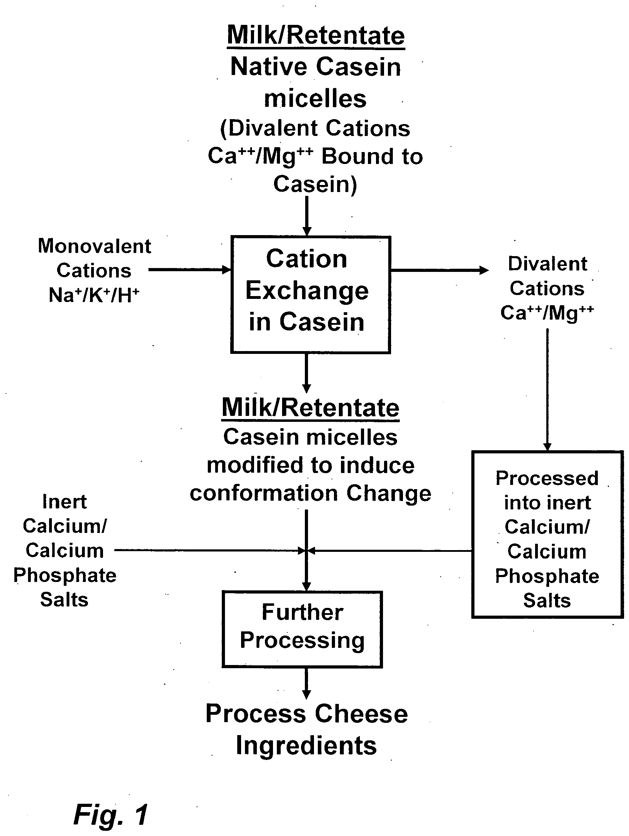

**FIG. 1** shows the general processing sequence in which the protein in milk or dairy liquid is subjected to cation exchange, facilitating the replacement of divalent cations bound to the casein micelle with externally sourced monovalent cations. The divalent cations then are processed to form inert salts, particularly inert calcium phosphate salts such as hydroxylapatite, or inert calcium or calcium phosphate salts are added. The modified milk or retentate subsequently is processed into appropriate process cheese ingredients.

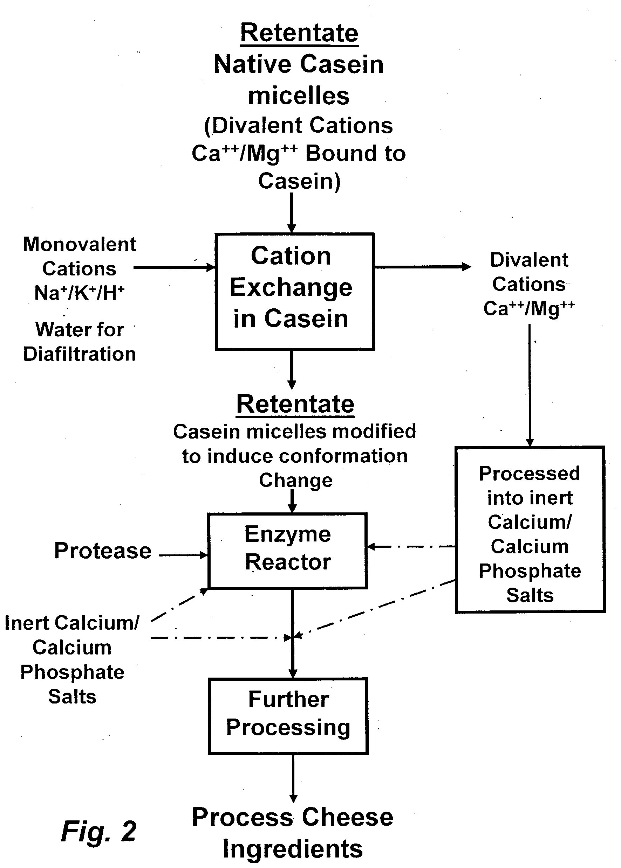

**FIG. 2** shows a preferred modification of the general process in which retentate is first subjected to cation exchange to facilitate the replacement of divalent cations in the casein micelle with externally sourced monovalent cations; the divalent cations are removed by membrane processing, possibly assisted by diafiltration; and the modified retentate then subjected to proteolysis by an appropriate enzyme. The divalent cations removed from the casein micelles may be simultaneously processed into inert salts, particularly calcium phosphate salts such as hydroxylapatite, or added from an independent source to the prepared retentate. Incorporation of the inert calcium into the prepared retentate may occur either during or following enzyme treatment. The treated retentate subsequently is concentrated and/or dried to produce a milk protein concentrate or milk protein isolate as a process cheese ingredient.

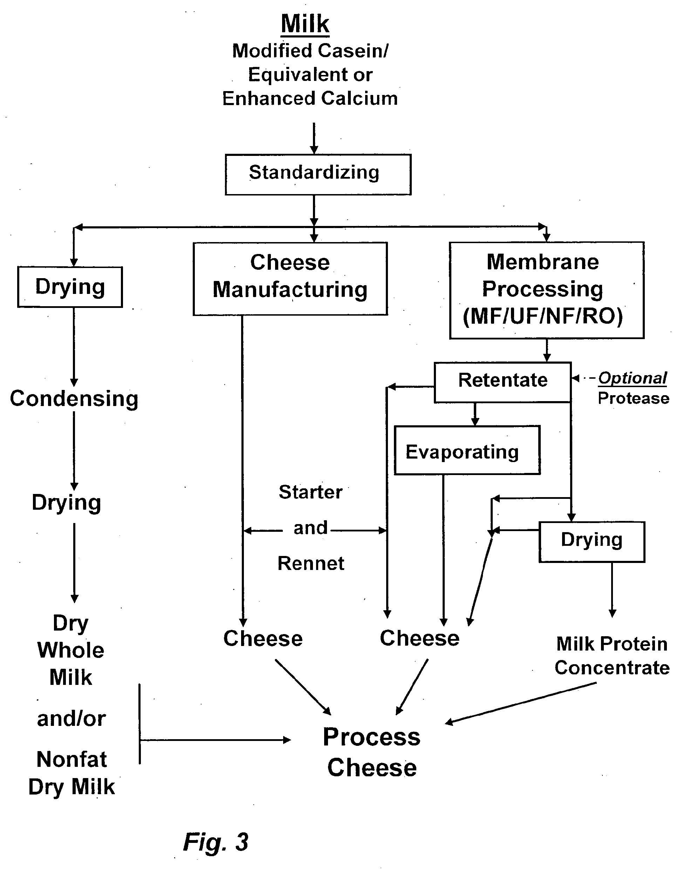

**FIG. 3** shows the range of ingredients that can be produced by the novel process as process cheese ingredients, including dry whole milk, nonfat dry milk, standardized varieties of natural cheese, retentates produced by membrane technology and the types of cheese, milk protein concentrate, or milk protein isolate that can be produced from retentate.

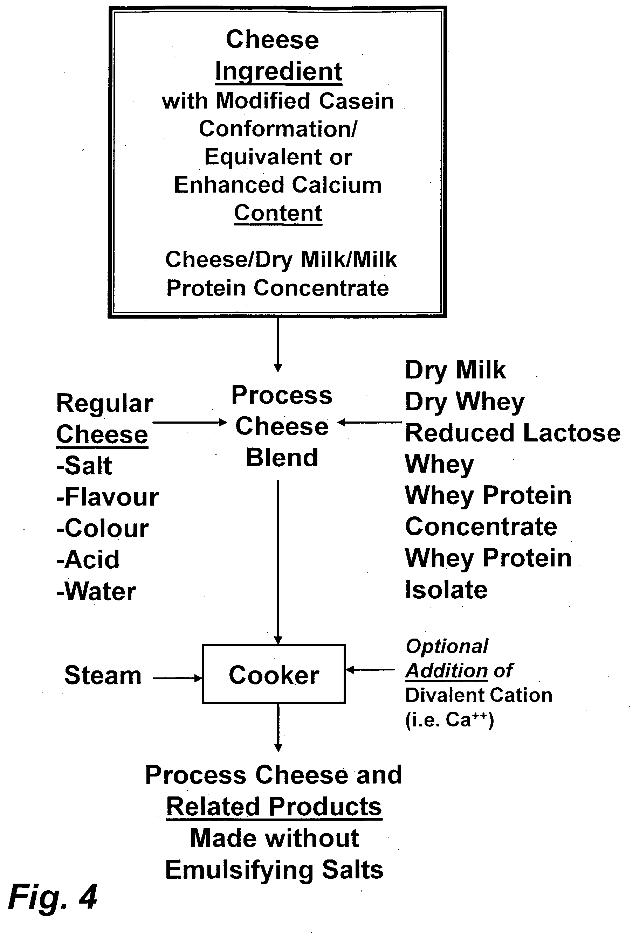

**FIG. 4** shows the use of the various ingredients in the manufacture of process cheese and related products without emulsifying salts, but at an equivalent or enhanced calcium content.

### EXAMPLES

The following non-limiting example further illustrates practice of the invention.

### EXAMPLE 1

The essential features for manufacturing process cheese and related products without emulsifying salts and with as equivalent or enhanced calcium content in the finished product is demonstrated by the preparation of pasteurized process American cheese food produced from equivalent formulations as follows:
(a) Control product made without emulsifying salts using the typical manufacturing procedure for pasteurized process American cheese food;
(b) Emulsifier free control product made with a calcium reduced milk protein concentrate as a reduced calcium casein source;
(c) Emulsifier free pasteurized process American cheese food made with a milk protein concentrate, made to include all the calcium originally present in pasteurized process American cheese food; and
(d) Emulsifier free pasteurized process cheese food made with a milk protein concentrate, made to enhance the calcium content of pasteurized process American cheese food.

The formulations for the different pasteurized process American cheese food products are shown in Table 1.1. Table 1.2 shows the formulated finished product composition expected for each of the finished products and the typical composition of pasteurized process cheese food reported by the United States Department of Agriculture (USDA).

**Table 1.1 Formulation of pasteurized process American cheese food made without emulsifying salts.**

| | ***No Emulsifying Salts*/ *Typical Process*** | ***No Emulsifying Salts*/ *Calcium reduced Casein Source*** | ***No Emulsifying Salts*/ *Equivalent Calcium Content²*** | **No Emulsifying Salts/ Enhanced Calcium Content³** |
|---|---|---|---|---|
| **Trial** | A | B | C | E |
| ***Ingredients*** | (kg) | (kg) | (kg) | (kg) |
| Salted Butter | 0.183 | 1.933 | 1.932 | 1.953 |
| NZMP™ 4864¹ | -0- | 1.500 | 1.544 | 1.584 |
| Cheddar (High Solids)⁴ | 7.652 | -0- | -0- | -0- |
| Cheddar (General)⁵ | 4.070 | 7.114 | 7.132 | 7.148 |
| Cheddar (Mature)⁶ | -0- | 0.797 | 0.782 | 0.720 |
| Water | 1.199 | 1.947 | 1.949 | 1.964 |
| Salt | 0.102 | 0.143 | 0.143 | 0.144 |
| Dry Sweet Whey | 0.661 | 0.436 | 0.389 | 0.358 |
| Sorbic Acid | 0.030 | 0.030 | 0.030 | 0.030 |
| Condensate | 1.100 | 1.100 | 1.100 | 1.100 |
| **Total** | 15.0 | 15.0 | 15.0 | 15.0 |

| | | | | |
|---|---|---|---|---|
| ¹NZMP™ Milk Protein Concentrate 4864 (Fonterra Co-operative Group, Ltd., Auckland, New Zealand). ²NZMP™ Milk Protein Concentrate 4864 modified by the addition of 2.9 kg calcium phosphate, tribasic [Ca₃(PO₄)₂] to 100 kg of NZMP 4864. ³NZMP™ Milk Protein Concentrate 4864 modified by the addition of 5.6 kg calcium phosphate, tribasic [Ca₃(PO₄)₂] to 100 kg of NZMP 4864. ⁴Cheddar Cheese: High Solids (Fonterra Co-operative Group, Ltd., Auckland, New Zealand), PB 123, Version 3.0309. ⁵Cheddar Cheese: General (Fonterra Co-operative Group, Ltd., Auckland, New Zealand), PB 119, Version 8.0309. ⁶Cheddar Cheese: Mature (Fonterra Co-operative Group, Ltd., Auckland, New Zealand), PB 091, Version 7.0309. NZMP™ Milk Protein Concentrate 4864 (Fonterra Co-operative Group, Ltd., Auckland, New Zealand) is a commercially available calcium reduced product, typically containing 81.5% protein, 5.8% moisture, 3.5% fat, 1700 mg/100 g sodium, and 800 mg/100 g calcium. A comparative milk protein concentrate, NZMP™ Milk Protein Concentrate 485 (Fonterra Co-operative Group, Ltd.) contains 81.3% protein, 5.7% moisture, 1.6% fat, 70 mg/100 g sodium, and 2230 mg/100 g calcium. | | | | |

**Table 1.2 Expected composition of pasteurized process American cheese food produced by respective formulations presented in Table 1, and the typical composition of pasteurized American process cheese food.**

| | ***No Emulsifying Salts*/ *Typical Process*** | ***No Emulsifying Salts*/ *Calcium reduced Casein Source*** | ***No Emulsifying Salts*/ *Equivalent Calcium Content*** | ***No Emulsifying Salts*/ *Enhanced Calcium Content*** | **Typical Pasteurized Process Cheese Food¹** |
|---|---|---|---|---|---|
| *Formulation* | **A** | **B** | **C** | **D** | **USDA** |
| Moisture (%) | 40.00 | 40.00 | 40.00 | 40.00 | 43.15 |
| Fat (%) | 30.60 | 30.60 | 30.60 | 30.60 | 24.60 |
| FDM/FDB2 | 51.00 | 51.00 | 51.00 | 51.00 | 43.27 |
| Protein (%) | 20.47 | 21.91 | 21.87 | 21.70 | 19.61 |
| Casein (%) | 19.70 | 19.70 | 19.70 | 19.63 | NA |
| Calcium (mg/100 g) | 612 | 489 | 601 | 700 | 574 |
| Calcium (mg/100g) | 31.1 | 24.8 | 30.5 | 35.5 | NA |
| per % Casein | | | | | |
| Sodium (mg/100 g) | 833 | 976 | 974 | 973 | 1189 |
| Sodium (mg/100 g) | 42.3 | 49.5 | 49.4 | 49.4 | NA |
| per % Casein | | | | | |

| | | | | | |
|---|---|---|---|---|---|
| ¹Posati, L. P., M. L. Orr. 1976. Composition of foods. Dairy and egg products. Agriculture handbook No. 8-1. Agricultural Research Service. United States Department of Agriculture. Washington, D.C. ²FDM = fat-in-dry-matter, which is equivalent to FDM or fat-on-a-dry basis; both values = [(% fat)/(% Total Solids)]*100. | | | | | |

The pasteurized process American cheese food was made in a twin screw, process cheese cooker: (Blentech CC45, Petaluma, CA) with a 20 kg capacity. The cheese and butter initially were ground with a Reitz grinder (Santa Rosa, CA) equipped with a 300 mm barrel and a 6 mm orifice plate.

The calcium content of the NZMP™ Milk Protein Concentrate 4864 (Fonterra Co-operative Group, Ltd.) was enriched by the additions of either 2.9 or 5.6 kg calcium phosphate, tribasic [Ca₃(PO₄)₂] to 100 kg of NZMP™ 4864. The calcium phosphate, tribasic was dry blended into the NZMP™ 4864, thereby increasing the overall calcium content of the finished product as required for formulations C and D, respectively.

Manufacture of the pasteurized process cheese food began with heating the jacket of the cheese cooker to 40°C, adding the ground (salted) butter, and blending until melted. The cheese, dry sweet whey, salt, and sorbic acid were then added to the cooker and blended at 50 rpm for 30 seconds for formulation A. Otherwise, NZMP™ Milk Protein Concentrate 4864 or the calcium enriched NZMP™ 4864 milk protein concentrate powders were added and mixed into the molten butter for 30 sec at 50 rpm for formulations B, C, and D, respectively. The cheese, dry sweet whey, salt, and sorbic acid were then added to the ingredient mixture in the cooker for formulations B, C, and D and blended at 50 rpm for 30 sec. The water was then slowly added to the ingredient blend for all formulations over a 1 minute period, while mixing at 50 rpm. The completed mixture for all formulations was then allowed to sit quiescently for 20 minutes.

The same cooking process was used to prepare all formulations. The prepared, blended ingredients were cooked to a temperature of 87°C by direct steam injection, the formulation allowing for the added water as steam condensate. The controlled temperature increase allowed a total cooking time of 5 minutes with the auger speed adjusted to 150 rpm. The cooked mixture was held at 87°C for 1 minute, then separate portions immediately poured into butter tubs in the shape of loaves and cast as slices on a casting table. Slices were processed with dimensions of 76 x 76 mm, and a thickness of 1.75 mm. The loaves and slices were cooled and held at refrigeration temperatures ≤ 5°C until analysis.

Table 1.3 shows the finished product composition of the as determined by analysis. Table 1.4 show the data in Table 1.3 transformed to an equivalent moisture content for direct comparison of the respective calcium and sodium contents of pasteurized process American cheese reported by the USDA.

**Table 1.3 Composition of Pasteurized Process American Cheese Food determined by analysis and typical composition of pasteurized process American cheese food reported by the USDA.**

| | ***No Emulsifying Salts*/ *Typical Process*** | ***No Emulsifying Salts*/ *Calcium reduced Casein Source*** | ***No Emulsifying Salts*/ *Equivalent Calcium Content*** | ***No Emulsifying Salts*/ *Enhanced Calcium Content*** | **Typical Pasteurized Process Cheese Food^{1,2,3}** |
|---|---|---|---|---|---|
| *Formulation* | **A** | **B** | **C** | **D** | **USDA** |
| Moisture (%) | 44.7 | 42.9 | 43.2 | 43.1 | 43.15 |
| Fat (%) | 29.3 | 30.1 | 29.7 | 30.0 | 24.60 |
| FDM/FDB⁴ (%) | 53.0 | 52.7 | 52.3 | 52.7 | 43.27 |
| Protein (%) | 19.46 | 21.37 | 23.05 | 20.93 | 19.61 |
| Lactose (%) | 3.44 | 2.45 | 2.19 | 2.04 | 7.29 |
| Salt (%) | 1.94 | 1.98 | 1.94 | 1.93 | NA |
| Calcium (mg/100 g) | 562 | 461 | 554 | 667 | 574 |
| Sodium (mg/100 g) | 704 | 890 | 875 | 899 | 1189 |
| | | | | | |

| | | | | | |
|---|---|---|---|---|---|
| ¹Posati, L. P., M. L. Orr. 1976. Composition of foods. Dairy and egg products. Agriculture handbook No. 8-1. Agricultural Research Service. United States Department of Agriculture. Washington, D.C. ²Salt composition not provided in source. ³Legal compositional standards required by Standard of Identity include moisture not to exceed 44% and fat not to be less than 23%, 21 CFR § 133.173(a)(3). ⁴FDM = fat-in-dry-matter, which is equivalent to FDM or fat-on-a-dry basis; both values = [(% fat)/(% Total Solids)]*100. | | | | | |

The moisture content of the pasteurized process American cheese food made without emulsifying salts by the typical process (44.7%) exceeded the legal maximum listed in the Standard of Identity (not greater than 44%). This product formed a very viscous, non-homogenous paste upon the completion of cooking that greatly obstructed the casting of acceptable slices. The lack of homogeneity possibly interfered with the ability to obtain a representative sample for the moisture analysis.

Although the cooked product did not form visible free fat, the emulsion broke with a single gentle rub between the finger and thumb to extrude large amounts of free fat. The extreme weakness of this emulsion would promote the formation of free fat in the finished product and is unacceptable in commercial process cheese manufacture. The high viscosity of cooked product shows that the available casein did not gel as required. Unable to form a uniform gel with the required elasticity, body, and texture, the product could not produce either a proper loaf or slice upon cooling. The finished product had an unacceptably grainy and stringy mouthfeel. The unacceptable emulsion stability and functionality of this product clearly demonstrates the advantages of using emulsifying salts in the manufacture of process cheese-type products by the traditional methods.

**Table 1.4 Adjusted Composition of Emulsifier Free pasteurized process cheese food spread slices (Equivalent Moisture).**

| | ***No Emulsifying Salts*/ *Typical Process*** | ***No Emulsifying Salts*/ *Calcium reduced Casein Source*** | ***No Emulsifying Salts*/ *Equivalent Calcium Content*** | ***No Emulsifying Salts*/ *Enhanced Calcium Content*** | **Typical Pasteurized Process American Cheese Food^{1,2}** |
|---|---|---|---|---|---|
| *Formulation* | **A** | **B** | **C** | **D** | **USDA** |
| Moisture (%) | 43.15 | 43.15 | 43.15 | 43.15 | 43.15 |
| Fat (%) | 30.12 | 30.0 | 29.7 | 30.0 | 24.60 |
| FDM/FDB³ (%) | 53.0 | 52.8 | 52.2 | 52.8 | 43.27 |
| Protein (%) | 20.01 | 21.28 | 23.07 | 20.91 | 19.61 |
| Lactose (%) | 3.54 | 2.44 | 2.19 | 2.04 | 7.29 |
| Salt (%) | 1.99 | 1.97 | 1.94 | 1.93 | NA |
| Calcium (mg/100 g) | 578 | 459 | 554 | 666 | 574 |
| Sodium (mg/100 g) | 724 | 886 | 876 | 898 | 1189 |
| | | | | | |

| | | | | | |
|---|---|---|---|---|---|
| ¹Posati, L. P., M. L. Orr. 1976. Composition of foods. Dairy and egg products. Agriculture handbook No. 8-1. Agricultural Research Service. United States Department of Agriculture. Washington, D.C. ²Source does not provide salt content. ³FDM = fat-in-dry-matter, which is equivalent to FDM or fat-on-a-dry basis; both values = [(% fat)/(% Total Solids)]*100. | | | | | |

All products made with added NZMP™ 4864 maintained similar compositions, fully meeting the moisture and fat requirements listed in the Standard of Identity. The appearance of each of these products at the completion of cooking greatly resembled similarly cooked, high quality pasteurized process American cheese made with emulsifying salts. No free fat was observed on any product made with added NZMP™ 4864. The emulsions of each of these products required 6 or more rubs between the thumb and fingers to break, subjectively indicating commercially acceptable emulsion stability.

Cooked product from all the formulations containing NZMP™ readily gelled within 30 seconds to 1 minute after being spread upon the casting table. The gelled products made with NZMP™ all readily cut cleanly to form highly acceptable slices. These were readily removed from the table and packaged in film without losing the desired shape or sticking to either the table or film surfaces.

The viscosity of cooked product made with the NZMP™ 4864 modified to contain an enhanced quantity of calcium (formulation D) seemed lower than the viscosity of product made with untreated NZMP™ 4864 (formulation B). The lower viscosity generally is quite favorable and desirable for many casting operations, enhancing operation of most types of casting equipment.

Trained judges determined that the flavor of the pasteurized process American cheese food slices made without emulsifying salts much more closely resembled natural Cheddar cheese when compared with process cheese spread made with emulsifying salts. Eliminating the use of these emulsifying salts in the manufacture of process cheese spread therefore greatly reduced the associated flavours these compounds impart to the finished product.

Table 1.5 shows the melting ability and firmness of the pasteurized process American cheese foods produced. The ability of the samples to melt was measured by the Schreiber test (Zehren, V. L., and D. D. Nusbaum. 1992. Process Cheese. Cheese Reporter Publishing Co., Inc. Madison, WI. Pp.294-295.) Cheese firmness was determined by instrumental texture profile analysis (Drake, M. A., V. D. Truong, and C. R. Daubert. 1999. Rheological and sensory properties of reduced-fat processed cheeses containing lecithin. J. Food Sci. 64: 744-747.)

**Table 1.5 Meltability and Firmness of pasteurized process American cheese made without emulsifying salts.**

| | ***No Emulsifying Salts*/ *Typical Process*** | ***No Emulsifying Salts*/ *Calcium reduced Casein Source*** | ***No Emulsifying Salts*/*Equivalent Calcium Content*** | **No Emulsifying Salts/ Enhanced Calcium Content** |
|---|---|---|---|---|
| *Formulation* | **A** | **B** | **C** | **D** |
| Melt | 6.1 | 9.2 | 8.8 | 6.9 |
| Firmness (g)¹ | 738 | 717 | 729 | 747 |
| *Std Dev (s)¹* | *(50.5)* | *(18.2)* | *(14.2)* | *(13.1)* |
| Firmness (N)¹ | 75.2 | 73.1 | 74.3 | 76.2 |
| *Std Dev (s)¹* | *(5.2)* | *(1*.*9)* | *(1.5)* | *(1.3)* |
| | | | | |

| | | | | |
|---|---|---|---|---|
| ¹Firmness data based upon analysis of 5 separate samples from each formulation. Std Dev = sample standard deviation. | | | | |

Most commercial applications require pasteurized process American cheese food with a melting ability of > 3 to 4. The melting ability of the slices made by all the treatments exceed the typical minimal melting requirements. The average firmness of cheese produced by all treatments is generally equivalent. However, the firmness measurements of the pasteurized process American cheese made without emulsifying salts with formulation A showed much greater deviation. The large deviation between firmness measurements of samples made with formulation A presumably indicates the non homogenous nature of the product produced.

The calcium content of pasteurized process American cheese food made without emulsifying salts is approximately equivalent to the calcium content reported in typical products by the USDA (i.e., 562 to 574 mg/100 g, respectively), particularly when adjusted to an equivalent moisture content in Table 1.4 (i.e., 578 to 574 mg/100 g, respectively). The sodium content of the product produced by formulation A is much lower than reported in typical products (i.e., either 704 or 724 to 1189 mg/100 g, respectively).

Both the calcium and sodium contents of the pasteurized process American cheese made without emulsifying salts and NZMP™ 4864 are lower than typical for this product as reported by the USDA. (i.e., 461 to 574 and 890 to 1189 mg/100 g, respectively). However, the calcium content of the product with untreated NZMP™ 4864 is lower than the control product made from formulation A (i.e. 459 to 578 mg/100 g), while the sodium content for this product is higher than observed in Table 1.4 for product made from formulation A (i.e. 886 to 724 mg/100 g).

Production of pasteurized process American cheese food with NZMP™ 4864 enriched with calcium phosphate, tribasic, produced acceptable products with a calcium content that is either equivalent or exceeds the calcium content reported for the typical product. The sodium content of products produced with the calcium enriched NZMP™ 4864 is essentially equivalent to the sodium content of product made with non-treated NZMP™ 4864, and much lower than the typical product. The results of this experiment therefore demonstrate the production of pasteurized process cheese-type products with unique ingredients without incurring a reduction in calcium content in the finished product.

### EXAMPLE 2

The following non-limiting example further demonstrates the ability for making process cheese by the invention with an equivalent or enhanced calcium content, yet without emulsifying salts. Table 2.1 shows the formulations used to prepare the process cheeses including:
(A) Process cheese made with emulsifying salts as a positive control to demonstrate typical manufacturing practice for making process cheese with emulsifying salts;
(B) Process cheese made by the typical manufacturing procedures without emulsifying salts to demonstrate the consequences of using the typical procedures without emulsifying salts;
(C) Process cheese made without emulsifying salts using a calcium reduced milk protein concentrate as a reduced calcium, casein source as a control example of the reduced calcium process; and
(D) Process cheese made with a uniquely prepared milk protein concentrate with an enhanced calcium content, specifically demonstrating the ability of the present invention to match or increase the calcium content of pasteurized process cheese made without emulsifying salts.

All product formulations conform to the Codex general standard for process(ed) cheese and spreadable process(ed) cheese (Codex stan A-8(b)-1978, Codex Alimentarius, Milk and Milk products, First edition. World Health Organization. Food and Agriculture Organization of the United Nations, Rome, 2007). Table 2.2 shows the expected finished product compositions as produced from the formulations, with the typical composition of process cheese made in New Zealand and pasteurized process American cheese made in the United States. Table 2.3 shows the expected calcium and sodium contents of each of the formulated process cheese products when adjusted to equivalent moisture contents of the typical New Zealand and U.S. products.

**Table 2.1 Formulations used to make pasteurized process cheese.**

| ***Trial*** | ***A*** | ***B*** | ***C*** | **D** |
|---|---|---|---|---|
| | *Typical manufacturing process, including the use of emulsifying salts* | *Typical manufacturing process without emulsifying salts* | *Calcium reduced Casein Source No Emulsifying Salts* | **Enhanced Calcium Content/No Emulsifying Salts** |
| ***Ingredients*** | (kg) | (kg) | (kg) | (kg) |
| Cheddar (Frozen)¹ | 9.0 | 10.7 | 2.2 | 2.09 |
| Cheddar (Mature)² | 1.25 | 1.25 | 1.25 | 3.0 |
| Cheddar (40% FDM)³ | 2.0 | -0- | 3.6 | 2.0 |
| NZMP™ 4864⁴ | -0- | -0- | 1.50 | -0- |
| Novel MPC⁵ | -0- | -0- | -0- | 1.77 |
| Salted Butter⁶ | 0.49 | 1.15 | 3.25 | 2.64 |
| Trisodium Citrate⁷ | 0.36 | -0- | -0- | -0- |
| Disodium | | -0- | -0- | -0- |
| Phosphate⁸ | 0.09 | | | |
| Salt⁹ | 0.11 | 0.2 | 0.25 | 0.16 |
| Sorbic Acid¹⁰ | 0.02 | 0.02 | 0.02 | 0.02 |
| Citric Acid¹¹ | 0.03 | 0.03 | 0.03 | 0.03 |
| Water | -0- | 1.65 | 1.25 | 1.5 |
| Water as Steam Condensate | 1.65 | 1.65 | 1.65 | 1.65 |
| **Total** | 15.0 | 15.0 | 15.0 | 15.0 |

| | | | | |
|---|---|---|---|---|
| ¹NZMP™ Cheddar Cheese Frozen (Fonterra Co-operative Group, Ltd., Auckland, New Zealand), PB 120, Version 06.0709. ²NZMP™ Cheddar Cheese: Mature (Fonterra Co-operative Group, Ltd., Auckland, New Zealand), PB 091, Version 08.0709. ³NZMP™ Cheddar Cheese 40% FDM (Fonterra Co-operative Group, Ltd., Auckland, New Zealand), PB 128, Version 04.0709. ⁴NZMP™ Milk Protein Concentrate 4864 (Fonterra Co-operative Group, Ltd., Auckland, New Zealand), PB 451, Version 3.0508. ³NZMP™ Novel Milk Protein Concentrate (Fonterra Co-operative Group, Ltd., Auckland, New Zealand), ⁶NZMP™ Salted Creamery Butter (Fonterra Co-operative Group, Ltd., Auckland, New Zealand), PB 100, Version 10.0110. ⁷Trisodium Citrate dihydrate, Jungbunzlauer, Austria ⁸Disodium Phosphate dihydrate, Innophos, New Jersey, USA ⁹Salt, Pacific Salt, NZ ¹⁰Sorbic Acid, Diacel Chemical LTD Tokyo ¹¹Citric Acid, Jungbunzlauer, Austria | | | | |

**Table 2.2 Calculated composition of process cheese produced by respective formulations presented in Table 2.1, and the typical composition of process cheese in New Zealand and pasteurized process American cheese produced in the United States of America.**

| ***Trial*** | ***A*** | ***B*** | ***C*** | ***D*** | *Typical Process Cheese in New Zealand¹* | **Typical Pasteurized Process American Cheese from the USDA²** |
|---|---|---|---|---|---|---|
| | *Typical manufacturing process, including the use of emulsifying salts* | *Typical manufacturing process without emulsifying salts* | *Calcium reduced Casein Source No Emulsifying Salts* | *Enhanced Calcium Content^{l} No Emulsifying Salts* | | |
| ***Formulation*** | **A** | **B** | **C** | **D** | | |
| Moisture (%) | 40.73 | 39.93 | 40.35 | 40.86 | 43.6 | 39.16 |
| Total Solids (%) | 59.27 | 60.07 | 59.65 | 59.14 | 56.4 | 60.84 |
| Fat (%) | 31.49 | 35.61 | 33.05 | 30.65 | 27.9 | 31.25 |
| Protein (%) | 19.73 | 18.49 | 20.64 | 19.62 | 21.3 | 22.16 |
| CHO³ (%) | 0.11 | 0.13 | 0.43 | 2.67 | 0.96 | 1.60 |
| Emulsifying Salts (%) | 2.58 | - 0 - | - 0 - | - 0 - | NA⁴ | NA⁴ |
| Ash (%) | 7.94 | 5.84 | 5.53 | 6.20 | 7.6 | 5.84 |
| Calcium (mg/100 g) | 607 | 589 | 432 | 900 | 320 | 616 |
| Sodium (mg/100 g) | 1,557 | 1,057 | 1,011 | 1,010 | 1130 | 1,430 |
| **Total** | 100.0 | 100.0 | 100.0 | 100.0 | 100.0 | 100.0 |

| | | | | | | |
|---|---|---|---|---|---|---|
| ¹Visser, F. R., I. K. Gray, M.M.F Williams. 1991. Composition of New Zealand Dairy Products. Design Print, Auckland. New Zealand. ISBN: 0-477-02575-7 ²Posati, L. P., M. L. Orr. 1976. Composition of foods. Dairy and egg products. Agriculture Handbook No. 8-1. Agricultural Research Service. United States Department of Agriculture. Washington, D.C. ³CHO = carbohydrate ⁴NA = data not available, References do not provide emulsifying salt content, although these products are known to contain emulsifying salts. Assume emulsifying salt solids are included in the compositional value provided for the ash. | | | | | | |

**Table 2.3 Compositions of formulated products showing the expected calcium and sodium content as formulated, as adjusted to a moisture content of 43.6% as typical for New Zealand process cheese, and as adjusted to a moisture content of 39.16 as reported by the USDA as typical for pasteurized process American cheese.**

| ***Trial*** | ***A*** | ***B*** | ***C*** | ***D*** | **Process Cheese Control** |
|---|---|---|---|---|---|
| | *Typical manufacturing process*, *including the use of emulsifying salts* | *Typical manufacturing process without emulsifying salts* | *Calcium reduced Casein Source No Emulsifying Salts* | *Enhanced Calcium Content^{l} No Emulsifying Salts* | |
| ***Component*** | | | | | |
| **Moisture: As is (%)** | **40.73** | **39.93** | **40.35** | **40.86** | **Formulated** |
| Calcium | 607 | 589 | 432 | 900 | Formulated |
| (mg/100 g) | | | | | |
| Sodium (mg/100 g) | 1,557 | 1,057 | 1,011 | 1,010 | Formulated |
| **Moisture: as typical for New Zealand process cheese (%)** | **43.6** | **43.6** | **43.6** | **43.6** | **New Zealand¹** |
| Calcium (mg/100 g) | 577.6 | 553.0 | 408.5 | 858.3 | 620 |
| Sodium (mg/100 g) | 1481.6 | 992.4 | 955.9 | 963.2 | 1130 |
| **Moisture: as reported by USDA (%)** | **39.16** | **39.16** | **39.16** | **39.16** | **USDA²** |
| Calcium (mg/100 g) | 623.1 | 596.6 | 440.6 | 925.9 | 616 |
| Sodium (mug/100 g) | 1598.2 | 1070.6 | 1031.2 | 1039.0 | 1430 |
| | | | | | |

| | | | | | |
|---|---|---|---|---|---|
| ¹Visser, F. R., I. K. Gray, M.M.F Williams. 1991. Composition of New Zealand Dairy Products. Design Print, Auckland. New Zealand. ISBN: 0-477-02575-7 ²Posati, L. P., M. L. Orr. 1976. Composition of foods. Dairy and egg products. Agriculture Handbook No. 8-1. Agricultural Research Service. United States Department of Agriculture. Washington, D.C. | | | | | |

The commercially available milk protein concentrate NZMP™ 4864 (Fonterra Co-operative Group, Ltd., Auckland, New Zealand) typically contains 81.5% protein, 5.8% moisture, 3.5% fat, 1700 mg/100 g sodium, and 800 mg/100 g calcium. In contrast, NZMP™ Milk Protein Concentrate 485 (Fonterra Co-operative Group, Ltd.) with 81.3% protein, 5.7% moisture, 1.6% fat, 70 mg/100 g sodium, and 2230 mg/100 g calcium.

Manufacture of the novel NZMP™ milk protein concentrate began with the separation of raw whole milk at ≤ 5°C to produce skim milk with ≤ 0.06% milk fat. The raw skim milk subsequently was pasteurized at 72°C for 16 seconds, cooled to 10°C, and fractionated by ultrafiltration with a Koch™ S4 HFK 131 membrane. Membrane processing continued until the protein fraction constituted about 60% of the total solids in the retentate. A suitable portion of the ultrafiltration retentate was introduced into an ion exchange column containing a strong acid cation exchange resin approved for food processing, AMBERLITE™ SRILNa to produce a calcium depleted retentate.. The calcium depleted retentate was combined with non-treated retentate to produce a combined retentate. The combined retentate was condensed by evaporation and pumped into the appropriate spray nozzles of a spray drier. Powdered calcium phosphate, tribasic [Ca₃(PO₄)₂] was injected into the stream of atomized retentate at the spray nozzle outlet, allowing for the incorporation of the calcium phosphate into the atomized retentate spray during the drying of the milk protein concentrate. Additional calcium phosphate, tribasic [Ca₃(PO₄)] was dry blended into the dried milk protein concentrate immediately upon drying, prior to packaging the product. The dried milk protein concentrate was packaged and held until use. Table 2.4 shows the composition of the novel NZMP™ milk protein concentrate, as well as the compositions of NZMP™ 4864, NZMP™ 470, and NZMP™ 456 for comparison.

**Table 2.4 Composition of the Novel NZMP™ milk protein concentrate and several related NZMP™ milk protein concentrates, with calcium and sodium contents adjusted to 4.0% moisture.**

| ***Component*** | *NZMP*™ *Novel MPC* | *NZMP*™ *4864¹* | *NZMP*™ *470²* | **NZMP™ 456³** |
|---|---|---|---|---|
| Moisture (%) | 2.79 | 5.8 | 4.4 | 3.8 |
| Total Solids (%) | 97.22 | 94.2 | 95.6 | 96.2 |
| Fat (%) | 1.49 | 3.5 | 1.4 | 1.3 |
| Total Protein (%) | 61.09 | 81.5 | 70.0 | 57.1 |
| CHO (%) | 17.90 | 2.2 | 17.0 | 30.1 |
| Ash (%) | 16.74 | 7.0 | 7.2 | 7.7 |
| Calcium (mg/100 g) | 4402 | 800 | 2180 | 1760 |
| Sodium (mg/100 g) | 2165 | 1700 | 160 | 280 |
| **Adjusted Moisture (%)** | **4.0** | **4.0** | **4.0** | **4.0** |
| Calcium (mg/100 g) | 4188.8 | 751.1 | 2061.2 | 1679.6 |
| Sodium (mg/100 g) | 2060.2 | 1596.1 | 151.3 | 267.2 |
| | | | | |

| | | | | |
|---|---|---|---|---|
| ¹NZMP™ Milk Protein Concentrate 4864 (Fonterra Co-operative Group, Ltd., Auckland, New Zealand), PB 451, Version 3.0508. ²NZMP™ Milk Protein Concentrate 470 (Fonterra Co-operative Group, Ltd., Auckland, New Zealand), PB 026, Version 10.0209. ³NZMP™ Milk Protein Concentrate 456 (Fonterra Co-operative Group, Ltd., Auckland, New Zealand), PB 025, Version 8.0209. | | | | |

The pasteurized process American cheese was made in a twin screw, process cheese cooker (Blentech CC45, Petaluma, CA) with a 20 kg capacity. The cheese and butter initially were ground with a Reitz grinder (Santa Rosa, CA) equipped with a 300 mm barrel and a 6 mm orifice plate.

Manufacture of the pasteurized process cheese using formulas A and B began with the addition of the ground cheese and butter to the cooker. Direct steam injection increased the temperature of the ground cheese-butter mixture in the cooker to 47°C while being mixed at 120 rpm. The emulsifying salts, salt, and sorbic acid were then added to the blend in the cooker for formulation A; and salt and sorbic acid added to the blend when processing formulation B. The blends for both formulations were then cooked to 85°C (185°F) within 5 minutes and then held for 1 minute. The auger speeds were maintained at 120 rpm throughout cooking. A suitable portion of the cooked, molten product was poured into 500 g molds to create a 500 g "loaf" upon cooling. The remaining molten, cooked product was cast upon a chill table to a thickness of 1.75 mm, cut into slices of 76 x 76 mm, and wrapped as individual slices. The packaged loaf and slice products were held in refrigerated storage until analysis.

Manufacture of the pasteurized process cheese using Formulas C and D began by heating the cheese cooker jacket to 40°C, adding the ground butter, and blending at 50 rpm until the butter was completely melted. The respective milk protein concentrate, either NZMP™ 4864 for formulation C or NZMP™ Novel milk protein concentrate for formulation D, was thoroughly blended into the molten butter for 3 to5 minutes at 55 rpm to create a smooth paste. The cheese was then added and thoroughly blended into the mixture for 2 to 3 minutes at 55 rpm. Salt and sorbic acid were then added to the ingredient mixture in the cooker for formulations C and D, respectively, and the mixture blended at 50 rpm for 30 sec. The water was then slowly added to the ingredient blend for both formulations over a 1 minute period, while mixing at 50 rpm. The completed mixture for respective formulations C and D was then allowed to sit quiescently for 20 minutes.

The prepared, blended ingredients for the respective formulations C and D were cooked to a temperature of 85°C by direct steam injection, the formulation allowing for the steam condensate as additional added water. The controlled temperature increase allowed a total cooking time of 5 minutes with the auger speed adjusted to 150 rpm. The cooked mixture was held at 85°C for 1 minute, and then separate portions immediately poured into molds with the shape of loves or cast as slices on a casting table. Slices were processed with dimensions of 76 x 76 mm, and a thickness of 1.75 mm. The loaves and slices were cooled and held at refrigeration temperatures ≤ 5°C until analysis.

Manufacture of process cheese by formulation A with emulsifying salts produced a well emulsified, smooth product. The emulsifying salts used in formulation A created the desired casein gel upon cooling, producing a finished process cheese with the desired body and texture. In contrast, formulation B failed to maintain the emulsion when processed by the typical procedure, thereby creating excessive amounts of free fat. Additionally, the casein failed to gel properly, creating a viscous grainy, paste-like finished product that lacks the desired body and texture of process cheeses. The product made without emulsifying salts with formulation B completely failed to produce slices on the casting table and is unacceptable.

Process cheese produced from the calcium reduced milk protein concentrate used in formulation C, NZMP™ 4864, successfully emulsified the available milk fat. However, the formulation C only produced a weak casein gel, creating a marginally acceptable to unacceptable body and texture.

Process cheese manufacture using the calcium enriched NZMP™ milk protein concentrate in formulation D successfully emulsified the available milk fat. The strong emulsion produced with the calcium enriched milk protein concentrate required 6 or more rubs between the thumb and fingers to break. Additionally, finished process cheese formed the desired firm, elastic casein gel to create the desired body and texture. The cooked product readily gelled within 30 seconds to 1 minute upon the casting table. The gelled product cut cleanly to form highly acceptable slices that were readily removed from the table and packaged without losing the desired shape or sticking to either the table or film surfaces. The finished product at the completion of cooking greatly resembled similarly cooked, high quality pasteurized process cheese made with emulsifying salts.

Table 2.5 shows the finished product composition of the as determined by analysis. Table 2.6 show the data in Table 2.6 transformed to an equivalent moisture content for direct comparison of the respective calcium and sodium contents of typical process cheese produced in New Zealand and pasteurized process American cheese reported by the USDA.

**Table 2.5 Composition of process cheese and typical composition of New Zealand process cheese and pasteurized process American cheese food reported by the USDA.**

| ***Trial*** | ***A*** | **B** | **C** | ***D*** | ***Typical Process Cheese*** | **Typical Pasteurized Process American Cheese** |
|---|---|---|---|---|---|---|
| | *Typical manufacturing process, including the use of emulsifying salts* | *Typical manufacturing process without emulsifying salts* | *Calcium reduced Casein Source No Emulsifying Salts* | *Enhanced Calcium Content*^{/} *No Emulsifying Salts* | | |
| ***Component*** | | | | | ***New Zealand¹*** | **USDA²** |
| Moisture (%) | 42.5 | 42.0 | 42.7 | 43.7 | 43.6 | 39.16 |
| Total Solids (%) | 57.5 | 58.0 | 57.3 | 56.3 | 56.4 | 60.84 |
| Fat (%) | 31.4 | 32.1 | 31.4 | 31.5 | 27.9 | 31.25 |
| FDM/FDB (%) | | | | | | |
| Protein (%) | 18.9 | 19.9 | 19.8 | 15.6 | 22.15 | 21.3 |
| CHO (%) | 2.2 | 2.6 | 2.7 | 5.5 | 1.0 | 1.6 |
| Ash (%) | 5.1 | 3.4 | 3.45 | 3.7 | 5.8 | 5.3 |
| Calcium (mg/100 g) | 556 | 420 | 421 | 686 | 6161 | 620 |
| **Sodium (mg/100 g)** | 1,410 | 913 | 893 | 998 | 1430 | 1130 |
| | | | | | | |

| | | | | | | |
|---|---|---|---|---|---|---|
| ¹Visser, F. R., I. K. Gray, M.M.F Williams. 1991. Composition of New Zealand Dairy Products. Design Print, Auckland. New Zealand. ISBN: 0-477-02575-7 ²Posati, L. P., M. L. Orr. 1976. Composition of foods. Dairy and egg products. Agriculture handbook No. 8-1. Agricultural Research Service. United States Department of Agriculture. Washington, D.C. ³FDM = fat-in-dry-matter, which is equivalent to FDM or fat-on-a-dry basis; both values = [(% fat)/(% Total Solids)]*100. ⁴CHO = carbohydrate, which is mostly lactose | | | | | | |

**Table 2.6 Finished product composition showing the determined calcium and sodium content, the calcium and sodium content as adjusted to a moisture content of 43.6% typical for New Zealand process cheese, and the calcium and sodium content as adjusted to a moisture content of 39.16 as reported by the USDA as typical for pasteurized process American cheese.**

| ***Trial*** | ***A*** | ***B*** | ***C*** | ***D*** | **Process Cheese Control** |
|---|---|---|---|---|---|
| | *Typical manufacturing process, including the use of emulsifying salts* | *Topical manufacturing process without emulsifying salts* | *Calcium reduced Casein Source No Emulsifying Salts* | *Enhanced Calcium Content*^{/} *No Emulsifying Salts* | |
| ***Component*** | | | | | |
| **Moisture: Observed** (%) | **42.5** | **42.0** | **42.7** | **43.7** | **Observed** |
| Calcium (mg/100 g) | 556 | 420 | 421 | 686 | Observed |
| Sodium (mg/100 g) | 1410 | 913 | 893 | 998 | Observed |
| **Moisture: as typical for New Zealand process cheese (%)** | **43.6** | **43.6** | **43.6** | **43.6** | **New Zealand¹** |
| Calcium (mg/100 g) | 577.6 | 553.0 | 408.5 | 858.3 | 620 |
| Sodium (mg/100 g) | 1481.6 | 992.4 | 955.9 | 963.2 | 1130 |
| **Moisture: as reported by USDA (%)** | **39.16** | **39.16** | **39.16** | **39.16** | **USDA²** |
| Calcium (mg/100 g) | 623.1 | 596.6 | 440.6 | 925.9 | 616 |
| Sodium (mg/100 g) | 1598.2 | 1070.6 | 1031.2 | 1039.0 | 1430 |
| | | | | | |

| | | | | | |
|---|---|---|---|---|---|
| ¹Visser, F. R., I. K. Gray, M.M.F Williams. 1991. Composition of New Zealand Dairy Products. Design Print, Auckland. New Zealand. ISBN: 0-477-02575-7 ²Posati, L. P., M. L. Orr. 1976. Composition of foods. Dairy and egg products. Agriculture Handbook No. 8-1. Agricultural Research Service. United States Department of Agriculture. Washington, D.C. | | | | | |

The moisture, fat, and general composition of all products comply with the Codex general standard. The calcium content of the process cheese made with the calcium enhanced NZMP™ milk protein concentrate in formula D, clearly exceed the calcium contents of the process cheeses produced by the other formulations, and as given by the standard references for both process cheese from New Zealand and pasteurized process American cheese from the United States. That is, the calcium content of the process cheese made with the calcium enhanced NZMP™ milk protein concentrate at 686 mg/100 g exceeds the calcium content of the control process cheese made with emulsifying salts at 556 mg/100, the control process cheese made without emulsifying salts at 420, the process cheese made with calcium reduced formulation C at 421 mg/100 g, or as typically reported for process cheese in New Zealand at 620 mg/100 g, and as typically reported for pasteurized process American cheese in the United States at 616 mg/100 g. Table 2.6 shows that the enhanced calcium content of process cheese made by formulation D occurs both for all products when measured in the finished product, and when the calcium contents are adjusted to an equivalent moisture contents of the typical New Zealand and USDA products.

The sodium content of the process cheese made with the calcium enhanced NZMP™ milk protein concentrate in formula D was lower than the sodium content of the control process cheese made with emulsifying salts and lower than reported by the standard references for both process cheese from New Zealand and pasteurized process American cheese from the United States. That is, the sodium content of the control process cheese made with emulsifying salts at 1410 mg/100, or as typically reported for process cheese in New Zealand at 1130 mg/100 g, and as typically reported for pasteurized process American cheese in the United States at 1430 mg/100 g all exceeded the sodium content of the process cheese made with the calcium enhanced milk protein concentrate with formulation D of 998 mg/100 g. The reduced sodium content of the process cheese made with formulation D similarly occurred when the sodium content was adjusted to an equivalent moisture content of both the reference process cheese reported for New Zealand or by USDA for pasteurized process American cheese from the United States. The sodium content of the process cheese made with formulation D exceeded the sodium contents of the process cheese made without emulsifying salts with both formulations B and C.

Table 2.7 shows the ability of the finished samples to melt with selected body and texture properties. The meltability was measured by the Schreiber melt test (Zehren, V. L., and D. D. Nusbaum. 1992. Process Cheese. Cheese Reporter Publishing Co., Inc. Madison, WI. Pp.294-295.) Cheese firmness was determined by instrumental texture profile analysis (Drake, M. A., V. D. Truong, and C. R. Daubert. 1999. Rheological and sensory properties of reduced-fat processed cheeses containing lecithin. J. Food Sci. 64: 744-747.) The body and texture properties of process cheese produced with formulation B could not be measured, because the broken emulsion and poor body and texture prevented the casting of acceptable loaves and slices.

**Table 2.7 Meltability and body and texture of process cheese as measured by the Schreiber melt text, a penetration text, and the vane test.**

| ***Trial*** | ***A*** | ***B*** | ***C*** | **D** |
|---|---|---|---|---|
| | *Typical manufacturing process, including the use of emulsifying salts* | *Typical manufacturing process without emulsifying salts* | *Calcium reduced Casein Source No Emulsifying Salts* | Enhanced Calcium Content^{/}No Emulsifying Salts |
| Melt | 5.8 | 6.1 | 9.1 | 6.9 |
| Firmness | 9.526 | NA | 6.76 | 6.296 |
| Penetration (N) | | | | |
| *Std Dev (s)¹* | *(0.97)* | NA | *(0.6)* | *(4.9)* |
| Vane Test (Pa) | 26292 | NA | 17165 | 14457 |
| *Std Dev (s)¹* | *(462)* | NA | *(554)* | *(616)* |
| | | | | |

| | | | | |
|---|---|---|---|---|
| ¹Firmness data based upon analysis of 5 separate samples from each formulation. Std Dev = sample standard deviation. | | | | |

The meltability of process cheese usually must equal or exceed a Schreiber melt test score of 3 to 4. The melting ability of the slices made by all the treatments exceeds the typical minimal melting requirements. The process cheese made with the calcium enhanced formulation D melted quite well, exceeding the meltablity of the control sample made with emulsifying salts using formulation A. Maintaining the meltability of process cheese made with an enhanced calcium content is unexpected, as process cheese ingredients with a calcium content typically reduce process cheese melt (Kosikowski, F. V., and V. V. Mistry. 1997 Cheese and Fermented Milk Foods. Vol. 1. Origins and Principles. 3rd Ed. F. V. Kosikowski, L.L.C. Westport, CT).

The measurement of product body and texture by the penetration and vane methods showed that the process cheese made with the calcium enhanced NZMP™ milk protein concentrate in formula D was softer than for the control product made with emulsifying salts and the process cheese made with the reduced calcium milk protein concentrate NZMP™ 4864. Analysis of body and texture data depends upon product moisture content. However, the firmness of the process cheese made with formula D and the enhanced calcium content is acceptable for many process cheese applications.

Process cheese with the calcium enriched NZMP™ milk protein concentrate in formula D produced highly acceptable products with a calcium content that exceeds the calcium content reported for the typical product. Producing process cheese with NZMP™ milk protein concentrate in formula D simultaneously reduced the sodium content when compared to the typical product. The results, therefore demonstrate the production of pasteurized process cheese-type products at a calcium content that equals or exceeds the calcium content of the typical product.

The above examples are illustrations of the practice of the invention. It will be appreciated by those skilled in the art that the invention can be carried out with numerous modifications and variations. For example, the calcium-enriched MPCs used can show variations in protein concentration and calcium content, the method of calcium depletion can be varied, the percentage calcium depletion and drying procedures can also be varied. Likewise, proportions and nature of the lipid and aqueous components may be varied.

## Claims

1. A method for preparing processed cheese without emulsifying salts, comprising:
(a) providing a dairy liquid composition or a gelled dairy composition or both, comprising casein, at least part of which has a proportion of its divalent ions, including calcium ions, replaced with sodium or potassium ions;
(b) cooking the composition or the combination of compositions to obtain an emulsion, and
(c) cooling the cooked composition to obtain a processed cheese;
wherein a substantially insoluble calcium source is mixed with at least one of the compositions at any time before the processed cheese forms in step (c), and at least 60% by weight of the substantially insoluble calcium source is in the form of particles that are less than 10 micrometres in nominal diameter..

2. A method as claimed in claim 1 wherein a dairy liquid composition is provided in step (a).

3. A method as claimed in claim 2 wherein the dairy liquid composition is an ultrafiltration retentate, preferably comprising calcium-depleted, concentrated or dried, milk protein concentrate or milk protein isolate.

4. A method as claimed in any of claims 1-3 wherein the composition to be cooked includes cheese or ultrafiltration cheese.

5. A method as claimed in any one of claims 1-4 wherein a dairy liquid composition is provided that is prepared by suspension of a dairy powder formed by drying a mixture of
(a) a dairy liquid that has undergone replacement of calcium by sodium or potassium and
(b) a substantially insoluble calcium source.

6. A method as claimed in any one of claims 1-5 wherein the cooking step does not involve stirring, or any stirring is at less than 2000 rpm, preferably less than 200 rpm.

7. A method as claimed in any one of claims 1-6 wherein a milk ingredient in the composition to be cooked is prepared by removal of calcium using cation exchange chromatography.

8. A method as claimed in any one of claims 1-7 wherein 5% to 95% of the divalent cations bound to caseins and divalently holding the micelles together are exchanged with monovalent cations in the composition to be cooked.

9. A method as claimed in claim 8 wherein the percentage is 30% to 90%, preferably 65% to 85%.

10. A method as claimed in claim 8 or claim 9 wherein the composition to be cooked comprises milk or retentate that has been subjected to cheese coagulating enzymes before or after cation exchange.

11. A method as claimed in any one of claims 1-10 wherein the substantially insoluble calcium source is selected from the group tri-calcium phosphate, hydroxylapatite, calcium carbonate, calcium sulphate, limestone, dolomite, coral, shell, aragonite, bone and gypsum, preferably a calcium salt selected from the group tricalcium phosphate, hydroxylapatite, calcium carbonate, and calcium sulphate.

12. A method as claimed in any one of claims 1-11 wherein the calcium source is in the form of particles that are less than 10 micrometres in nominal diameter.

13. A method as claimed in any one of claims 1-12 wherein the amount of substantially insoluble calcium added is selected so that the level of calcium added is either at least 5% of the calcium in the processed cheese or is sufficient to bring the calcium concentration in the mixture to be cooled to the level of the corresponding mixture had the calcium-depleted casein source not been calcium-depleted, preferably wherein the amount of substantially insoluble calcium added is selected so that the calcium concentration in the composition to be cooked exceeds the level of the corresponding non-depleted mixture by 1-40%.

14. A method as claimed in claim 13 wherein the dry matter content of the reduced calcium milk protein concentrate is 10% to 35% of the weight of cheese in the blend to be cooked, and the reduced calcium milk protein concentrate has 20-100% calcium depletion.

15. A method as claimed in any one of claims 1-14 wherein the composition to be cooked has a pH in the range 4.6 to 6.4.

16. A method as claimed in any one of claims 1-15 where the cooking temperature is from 65°C to 150°C, preferably wherein the temperature is 65°C to 110°C and the cooking time is 1 to 30 minutes.

## Patentansprüche

1. Verfahren zum Herstellen von verarbeitetem Käse ohne Emulgatorsalze, umfassend:
(a) Bereitstellen einer Milchflüssigkeitszusammensetzung oder einer gelierten Milchzusammensetzung oder beides, umfassend Kasein, wobei mindestens ein Teil einen Anteil der zweiwertigen lone davon aufweist, einschließlich Calciumione, die gegen Natrium- oder Kaliumione ersetzt werden;
(b) Kochen der Zusammensetzung oder Kombination von Zusammensetzungen zum Erhalten einer Emulsion und
(c) Kühlen der gekochten Zusammensetzung zum Erhalten eines verarbeiteten Käses;
wobei eine im Wesentlichen unlösliche Calciumquelle mit mindestens einer der Zusammensetzungen zu jedem beliebigen Zeitpunkt gemischt wird, bevor sich der verarbeitete Käse in Schritt (c) bildet, und wobei mindestens 60 Gew.- % der im Wesentlichen unlöslichen Calciumquelle in Form von Teilchen vorliegt, die kleiner als 10 Mikrometer im Nenndurchmesser sind.

2. Verfahren nach Anspruch 1, wobei eine Milchflüssigkeitszusammensetzung in Schritt (a) bereitgestellt wird.

3. Verfahren nach Anspruch 2, wobei die Milchflüssigkeitszusammensetzung ein Ultrafiltrationsretentat ist, das vorzugsweise calciumabgereichertes, konzentriertes oder getrocknetes Milcheiweißkonzentrat oder Milcheiweißisolat ist.

4. Verfahren nach einem der Ansprüche 1 bis 3, wobei die zu kochende Zusammensetzung Käse oder Ultrafiltrationskäse aufweist.

5. Verfahren nach einem der Ansprüche 1 bis 4, wobei eine Milchflüssigkeitszusammensetzung bereitgestellt wird, die durch Suspension eines Milchpulvers durch Trocknen einer Mischung aus Folgendem gebildet wird
(a) einer Milchflüssigkeit, bei der Calcium durch Natrium oder Kalium ersetzt wurde und
(b) eine im Wesentlichen unlösliche Calciumquelle.

6. Verfahren nach einem der Ansprüche 1 bis 5, wobei der Kochschritt kein Rühren einschließt, oder wobei jegliches Rühren bei weniger als 2000 U/min erfolgt, vorzugsweise weniger als 200 U/min.

7. Verfahren nach einem der Ansprüche 1 bis 6, wobei ein Milchbestandteil in der zu kochenden Zusammensetzung durch Entfernen von Calcium mittels Kationenaustauschchromatografie hergestellt wird.

8. Verfahren nach einem der Ansprüche 1 bis 7, wobei 5 % bis 95 % der zweiwertigen Kationen, die an Kaseine gebunden sind und die Mizellen zweiwertig zusammenhalten, gegen einwertige Kationen in der zu kochenden Zusammensetzung ausgetauscht werden.

9. Verfahren nach Anspruch 8, wobei der Anteil 30 % bis 90 %, vorzugsweise 65 % bis 85 % beträgt.

10. Verfahren nach Anspruch 8 oder Anspruch 9, wobei die zu kochende Zusammensetzung Milch oder Retentat umfasst, die/das vor oder nach dem Kationenaustausch käsekoagulierenden Enzymen ausgesetzt wurde.

11. Verfahren nach einem der Ansprüche 1 bis 10, wobei die im Wesentlichen unlösliche Calciumquelle ausgewählt ist aus der Gruppe von Tri-Calciumphosphat, Hydroxylapatit, Calciumcarbonat, Calciumsulfat, Kalkstein, Dolomit, Koralle, Schale, Aragonit, Knochen und Gips, vorzugsweise einem Calciumsalz ausgewählt aus der Gruppe von Tricalciumphosphat, Hydroxylapatit, Calciumcarbonat und Calciumsulfat.

12. Verfahren nach einem der Ansprüche 1 bis 11, wobei die Calciumquelle in Form von Teilchen vorliegt, die kleiner als 10 Mikrometer im Nenndurchmesser sind.

13. Verfahren nach einem der Ansprüche 1 bis 12, wobei die Menge des im Wesentlichen unlöslichen zugegebenen Calciums derart ausgewählt ist, dass das Niveau von zugegebenem Calcium im verarbeiteten Käse entweder mindestens 5 % beträgt oder ausreicht, um die Calciumkonzentration in der zu kühlenden Mischung auf ein Niveau der zugehörigen Mischung zu bringen, wenn die calciumabgereicherte Kaseinquelle nicht calciumabgereichert sein sollte, wobei vorzugsweise die Menge von im Wesentlichen unlöslichen zugegebenen Calcium derart ausgewählt wird, dass die Calciumkonzentration in der zu kochenden Konzentration das Niveau der entsprechenden nicht abgereicherten Mischung um 1-40 % überschreitet.

14. Verfahren nach Anspruch 13, wobei der Trockenmateriegehalt des Milcheiweißkonzentrats mit reduziertem Calcium 10 % bis 35 % des Gewichts des Käses in der zu kochenden Mischung beträgt und das Milcheiweißkonzentrat mit reduziertem Calcium 20 bis 100 % Calciumabreicherung aufweist.

15. Verfahren nach einem der Ansprüche 1 bis 14, wobei die zu kochende Zusammensetzung einen pH-Wert in dem Bereich von 4,6 bis 6,4 aufweist.

16. Verfahren nach einem der Ansprüche 1 bis 15, wobei die Kochtemperatur von 65°C bis 150°C beträgt, wobei die Temperatur vorzugsweise 65°C bis 110°C beträgt und die Kochzeit 1 bis 30 Minuten beträgt.

## Revendications

1. Procédé de préparation de fromage fondu dépourvu de sels de fonte, comprenant :
(a) la fourniture d'une composition de produit laitier liquide ou d'une composition laitière gélifiée ou de l'une et l'autre, comprenant de la caséine, dont au moins une partie a une proportion de ses ions divalents, incluant les ions calcium, remplacée par des ions sodium ou potassium ;
(b) la cuisson de la composition ou de la combinaison de compositions pour obtenir une émulsion, et
(c) le refroidissement de la composition cuite pour obtenir un fromage fondu;
dans lequel une source de calcium sensiblement insoluble est mélangée à au moins une des compositions à n'importe quel moment avant que le fromage fondu se forme à l'étape (c), et au moins 60 % en poids de la source de calcium sensiblement insoluble se présente sous la forme de particules qui ont un diamètre nominal inférieur à 10 micromètres.

2. Procédé selon la revendication 1, dans lequel une composition de produit laitier liquide est fournie à l'étape (a).

3. Procédé selon la revendication 2, dans lequel la composition de produit laitier liquide est un rétentat d'ultrafiltration, comprenant de préférence un concentré de protéines laitières ou isolat de protéines laitières, appauvri en calcium, concentré ou séché.

4. Procédé selon l'une quelconque des revendications 1 à 3, dans lequel la composition à cuire comprend du fromage ou du fromage d'ultrafiltration.

5. Procédé selon l'une quelconque des revendications 1 à 4, dans lequel on fournit une composition de produit laitier liquide qui est préparée par suspension d'une poudre laitière formée en séchant un mélange de
(a) un produit laitier liquide qui a subi un remplacement du calcium par du sodium ou du potassium et
(b) une source de calcium sensiblement insoluble.

6. Procédé selon l'une quelconque des revendications 1 à 5, dans lequel l'étape de cuisson n'implique pas d'agitation, ou l'une quelconque agitation est à moins de 2000 tr/min, de préférence moins de 200 tr/min.

7. Procédé selon l'une quelconque des revendications 1 à 6, dans lequel un ingrédient de lait dans la composition à cuire est préparé par le retrait du calcium à l'aide d'une chromatographie à échange cationique.

8. Procédé selon l'une quelconque des revendications 1 à 7, dans lequel 5 % à 95 % des cations divalents liés à des caséines et maintenant de façon divalente les micelles ensemble sont échangés avec des cations monovalents dans la composition à cuire.

9. Procédé selon la revendication 8, dans lequel le pourcentage va de 30 % à 90 %, de préférence de 65 % à 85 %.

10. Procédé selon la revendication 8 ou la revendication 9, dans lequel la composition à cuire comprend du lait ou un rétentat qui a été soumis à des enzymes de coagulation de fromage avant ou après l'échange cationique.

11. Procédé selon l'une quelconque des revendications 1 à 10, dans lequel la source de calcium sensiblement insoluble est choisie dans le groupe phosphate tricalcique, hydroxylapatite, carbonate de calcium, sulfate de calcium, calcaire, dolomite, corail, coquille, aragonite, os et gypse, de préférence un sel de calcium choisi parmi le groupe de phosphate tricalcique, hydroxylapatite, carbonate de calcium et sulfate de calcium.

12. Procédé selon l'une quelconque des revendications 1 à 11, dans lequel la source de calcium se présente sous la forme de particules qui ont un diamètre nominal inférieur à 10 micromètres.

13. Procédé selon l'une quelconque des revendications 1 à 12, dans lequel la quantité ajoutée de calcium sensiblement insoluble est sélectionnée de sorte que le taux de calcium ajouté représente soit au moins 5 % du calcium dans le fromage fondu soit est suffisant pour amener la concentration en calcium dans le mélange à refroidir au taux du mélange correspondant dont la source de caséine appauvrie en calcium n'a pas été appauvrie en calcium, de préférence dans lequel la quantité de calcium sensiblement insoluble ajoutée est sélectionnée de sorte que la concentration en calcium dans la composition à cuire dépasse le taux du mélange correspondant non appauvri de 1 à 40 %.

14. Procédé selon la revendication 13, dans lequel la teneur en matières sèches du concentré de protéines laitières à calcium réduit va de 10 % à 35 % du poids de fromage dans le mélange à cuire, et le concentré de protéines laitières à calcium réduit présente un appauvrissement en calcium de 20 à 100 %.

15. Procédé selon l'une quelconque des revendications 1 à 14, dans lequel la composition à cuire a un pH situé dans la plage allant de 4,6 à 6,4.

16. Procédé selon l'une quelconque des revendications 1 à 15, où la température de cuisson va de 65 °C à 150 °C, de préférence dans lequel la température va de 65 °C à 110 °C et le temps de cuisson va de 1 à 30 minutes.
